# EUROPÄISCHE PATENTSCHRIFT

(11) **EP 2 195 234 B1**
(45) Veröffentlichungstag und Bekanntmachung des Hinweises auf die Patenterteilung: **10.08.2011**
(21) Anmeldenummer: 08760770.1
(22) Anmeldetag: 10.06.2008
(51) Int. Cl.: B64C 1/12

(54) **STRUKTURBAUTEIL UND VERFAHREN ZUM VERSTEIFEN EINER AUßENHAUT**
STRUCTURAL COMPONENT AND METHOD FOR STIFFENING AN EXTERNAL SKIN
ÉLÉMENT DE STRUCTURE ET PROCÉDÉ POUR RIGIDIFIER UNE ENVELOPPE EXTÉRIEURE

(30) Priorität: 18.09.2007 DE 102007044386; 18.09.2007 US 973291 P
(43) Veröffentlichungstag der Anmeldung: 16.06.2010
(73) Patentinhaber: Airbus Operations GmbH, 21129 Hamburg (DE)
(72) Erfinder: STEPHAN, Andreas, 21717 Fredenbeck (DE)
(74) Vertreter: Peckmann, Ralf
(86) Internationale Anmeldenummer: PCT/EP2008/057210
(87) Internationale Veröffentlichungsnummer: WO 2009/037005

(56) Entgegenhaltungen:
- EP-A- 1 216 816
- WO-A-02/083389
- DE-C1- 19 844 035
- US-A1- 2006 231 682

## Beschreibung

Die vorliegende Erfindung betrifft ein Strukturbauteil für ein Luft- oder Raumfahrzeug, sowie ferner ein Verfahren zum Versteifen einer Außenhaut eines Luft- oder Raumfahrzeugs.

Obwohl auf beliebige Leichtbauteile anwendbar, werden die vorliegende Erfindung sowie die ihr zugrunde liegende Problematik in Bezug auf eine Rumpfhülle eines Flugzeugs näher erläutert.

Üblicherweise werden Rumpfschalen für Flugzeuge in so genannter Leichtbauweise aus einer Außenhaut hergestellt, die an der Innenseite durch eine zweidimensionale Struktur aus in Längsrichtung des Flugzeugs verlaufenden Stringern und in Querrichtung verlaufenden Spanten als Versteifungselementen verstärkt ist. Übliche Profilquerschnitte für Stringer sind z.B. Z-förmige Querschnitte mit halbkreisförmigen Bördeln, reine Z-Profile, oder T-Profile, die mit Aufdickungen am Ende des den Balken des "T" bildenden Stegs versehen sein können. Insbesondere im Bereich von Fenstern oder einer Längsnaht in der Außenhaut werden ferner Sonderformen wie z.B. Stringer mit einem als Krückstockprofil bezeichneten, einem auf den Kopf gestellten "J" ähnelnden Profil verwendet.

Die Stringer nehmen hauptsächlich Lasten in Längsrichtung auf und sind über Nieten oder Klebung mit der Außenhaut verbunden. Im oberen Bereich des Flugzeugs herrschen vornehmlich Zuglasten auf den Stringer, im unteren Bereich in erster Linie Drucklasten. Wird der Stringer auf Druck belastet, neigt er zum seitlichen Wegknicken. Dies könnte durch einen ausreichend großen Querschnitt kompensiert werden, was sich im Flugzeugbau aber sehr negativ auf das Fluggewicht auswirkt und deshalb unerwünscht ist.

Herkömmlicherweise werden die Stringer in regelmäßigen Abständen mit Stützwinkeln abgestützt, um ein Wegknicken bei Druckbelastung zu verhindern. Beispielsweise werden Stützwinkel an jedem Kreuzungspunkt eines Stringers mit einem Spant vorgesehen, etwa in Form eines reinen, als separates Bauteil ausgeführten Stützwinkels oder auch in Form eines mit einem den Spant tragenden Clip einstückig ausgeführten Winkels. Derartige Stützwinkel stützen jeweils einen Spant und einen Stringer an ihrer gemeinsamen Kreuzungsstelle gegeneinander ab. Auch derartige Stützwinkel erhöhen jedoch das Fluggewicht und erfordern zudem einen nicht zu vernachlässigenden Konstruktions- und Montageaufwand. So müssen z.B. Stützwinkel unterschiedlicher Formen und Geometrien vorgehalten werden, da innerhalb eines Flugzeugs Formen und Kreuzungswinkel von Stringern und Spanten vielfältig sind.

Eine andere Richtung beschreitet die Faserverbundbauweise.

Die US 2006/231682 (Fig. 1-3) offenbart eine Flugzeugrumpftonne in Faserverbundwerkstoff mit einer Außenhaut, Stringern und Schubkämme, an denen quer zur Richtung der Stringer über dieselben hinweg verlaufende Spanten befestigt sind. Außenhaut, Stringer und Schubkämme sind als eine Einheit aus einem faserverstärkten Kunststoffmaterial gebildet und in einem Formwerkzeug gemeinsam ausgehärtet. Durch die einstückige Ausbildung sind die Stringer an den Kreuzungsstellen mit den Schubkämmen stoffschlüssig und somit auch formschlüssig verbunden.

Die EP 1 216 816 (Fig. 5) offenbart ein Strukturbauteil aus Faserverbundmaterial, bei dessen Herstellung eine Außenhaut, auf dieser verlaufende Stringer und quer zu den Stringern verlaufende Rippen, in die Durchführungsöffnungen für die Stringer geschnitten sind, durch Laminieren und gemeinsames Aushärten miteinander verbunden werden.

Somit kann auf herkömmliche Stützwinkel verzichtet werden. Das Oberbegriff des Anspruchs 1 gibt diese bekannte Ausgestaltung wieder.

Fußelement und Versteifungselement sind hier jedoch verbunden, und etwaige daraus hervorgehende Beschädigungen der jeweiligen Oberflächen können zu Korrosion führen. Stoffschlüssige Verbindungen schränken zudem die Materialwahl stark ein.

Es ist Aufgabe der vorliegenden Erfindung, eine verbesserte Stützung der Stringer anzugeben.

Erfindungsgemäß wird diese Aufgabe durch ein Strukturbauteil mit den Merkmalen des Patentanspruchs 1, ein Luft- oder Raumfahrzeug mit den Merkmalen des Patentanspruchs 12, oder durch ein Verfahren zum Versteifen der Außenhaut eines Luft- oder Raumfahrzeugs mit den Merkmalen des Patentanspruchs 13 gelöst.

Die der vorliegenden Erfindung zugrunde liegende Idee besteht darin, dass der Formschluss zwischen einem ersten Versteifungselement und einem das zweite Versteifungselement tragenden Fußelement durch ein dazwischen eingefügtes Distanzstück hergestellt wird. Dies ermöglicht, ein durch den Formschluss stabilisiertes und zugleich durch die Trennung des ersten Versteifungelements vom Fußelement vor Beschädigungen und nachfolgende Korrosion geschütztes und damit dauerhaftes Strukturbauteil bereitzustellen, ohne auf aufwändige und die Materialwahl stark einschränkende stoffschlüssige Verbindungstechniken angewiesen zu sein

In den Unteransprüchen finden sich vorteilhafte Ausgestaltungen und Verbesserungen der Erfindung.

Gemäß einer bevorzugten Weiterbildung sichert die Durchführungsöffnung das erste Versteifungselement formschlüssig gegen seitliches Wegknicken. Dies ist vorteilhaft, da das erste Versteifungselement auf Druck belastet werden kann, ohne seitlich wegzuknicken.

Gemäß einer bevorzugten Weiterbildung ist das Fußelement einstückig mit dem zweiten Versteifungselement ausgebildet, z.B. in Art eines so genannten Integralspants. Dies hat den Vorteil, die Anzahl der benötigten Teile und den Montageaufwand zu verringern. Alternativ sind das Fußelement und das zweite Versteifungselement miteinander vernietet, was vorteilhaft ist, da so z.B. Spanten einheitlicher Bauart durch modifizierte Fußelemente an unterschiedliche Unterstrukturen angepasst werden können.

Gemäß einer bevorzugten Weiterbildung weist das Distanzstück einen Kunststoffwerkstoff, insbesondere einen thermoplastischen Werkstoff auf. Dies hat den vorteil, dass das erste Versteifungselemente weich gehalten ist, so dass z.B. Vibrationen der Versteifungselemente absorbiert werden, was u.a. zu verringerter Schallemission führt.

Gemäß einer bevorzugten Weiterbildung weist das Distanzstück eine Länge auf, die nicht geringer ist als eine Breite eines Fußabschnitts des Fußelements. Auf diese Weise wird das Distanzstück und damit mittelbar das erste Versteifungselement auch dann sicher gehalten, wenn das zweite versteifungselement sich z.B. infolge hoher Belastung geringfügig neigt.

Gemäß einer bevorzugten Weiterbildung weist das Distanzstück eine Dicke auf, die nicht geringer ist als eine Dicke des ersten Versteifungselements. Dies gewährleistet eine ausreichende Eigenstabilität des Distanzstücks.

Gemäß einer bevorzugten Weiterbildung ist das Distanzstück formschlüssig auf dem ersten Versteifungselement gehalten. Dies ist besonders vorteilhaft, da auf diese Weise das Distanzstück nicht durch Nieten oder andere Befestigungsmittel am ersten Versteifungselement oder dem Fußelement befestigt zu werden braucht.

Gemäß einer bevorzugten Weiterbildung weist das Distanzstück eine Nase auf, welche in einer entsprechend geformte Öffnung des ersten Versteifungselements ruht. Auf diese Weise wird verhindert, dass das Distanzstück längs dem ersten Versteifungselement verrutscht und sich so z.B. aus der Durchführungsöffnung entfernt.

Gemäß einer bevorzugten weiterbildung weist das erste Versteifungselement einen Profilschenkel auf. Das Distanzstück weist eine Hakenanformung auf, die um den Profilschenkel gehakt ist. Auf diese Weise wird verhindert, dass das Distanzstück quer zum ersten Versteifungselement verrutscht und sich so z.B. aus der Durchführungsöffnung entfernt.

Gemäß einer bevorzugten Weiterbildung weist das Distanzstück eine Nut auf, in die das Fußelement eingeschoben ist. Dies verhindert ein Verschieben des Distanzstücks längs dem ersten Versteifungselement.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische Ansicht eines Strukturbau- teils gemäß einer Ausführungsform der Erfindung;
- Fig. 2: eine Seitenansicht des Strukturbauteils aus Fig. 1; und
- Fig. 3: eine Explosionszeichnung eines Strukturbauteils gemäß einer weiteren Ausführungsform.

In den Figuren bezeichnen dieselben Bezugszeichen gleiche oder funktionsgleiche Komponenten, soweit nichts Gegenteiliges angegeben ist.

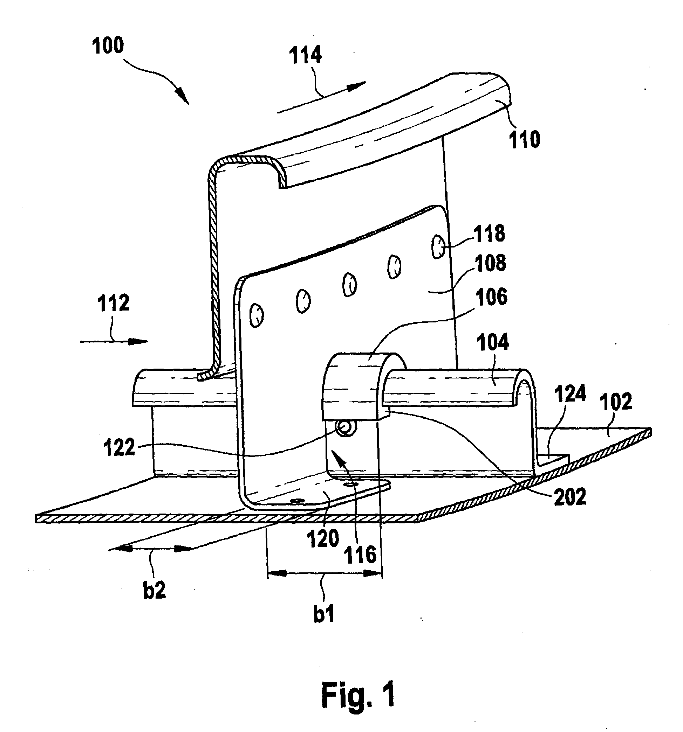

Figur 1 zeigt in perspektivischer Ansicht ein Strukturbauteil 100 eines Flugzeugs, das einen Ausschnitt der Außenhaut 102 des Flugzeugrumpfs umfasst, mit Blickrichtung auf die Innenseite der Außenhaut 102. Auf der Außenhaut verläuft in Längsrichtung 112 des Flugzeugs ein Stringer 104 als ein erstes, die Außenhaut in Längsrichtung 112 versteifenden versteifungselement 104. Der Stringer 104 weist ein so genanntes Krückstockprofil auf, das mit einem flachen Fußabschnitt 124 auf der Außenhaut 102 verklebt oder vernietet und an seinem oberen Ende in der Art eines Krückstockgriffs gekrümmt ist. Stringer 104 und/oder Außenhaut 102 können aus gleichen oder unterschiedlichen Werkstoffen gefertigt sein, z.B. Aluminium, kohlefaserverstärktem Kunststoff oder anderen Verbundwerkstoffen.

Am oberen Ende des Stringerprofils 104 ist ein Distanzstück 106 der Länge b1 formschlüssig auf dem Stringer 104 befestigt. Das Distanzstück ist z.B. als Spritzgussteil aus einem dauerhaften Kunststoff gefertigt und weist ein Profil auf, dessen Unterseite der Krümmung der Oberseite des Stringers 104 folgt. Eine Hakenanformung 202 an einem Ende des Profils des Distanzstücks 106 ist um das freie Ende 200 des Krückstockprofils des Stringers 104 gehakt. Das Distanzstück verläuft von der Hakenanformung 202 über die Krümmung des Krückstockprofils hinweg auf die gegenüberliegende, dem Betrachter abgewandte Seite des Stringers 104. Hier folgt es dem weiter senkrecht verlaufenden Profil des Stringers 104 nach unten und endet oberhalb des Stringerfußes 124, ohne diesen zu berühren. Im dem Krückstockprofil senkrecht nach unten folgenden Bereich des Distanzstücks ist an der dem Stringer 104 zugewandten Seite eine zylindrische Nase 122 ausgebildet, die in einer im Stringer 104 an entsprechender Stelle ausgebildeten Bohrung ruht. Durch die um das Krückstockprofil des Stringers 104 gehakte Hakenanformung und die in der Bohrung ruhende zylindrische Nase 122 ist das Distanzstück formschlüssig auf dem Stringer 104 befestigt und gegen Verschieben in jeder Richtung gesichert.

Oberhalb des Stringers 104 verläuft in einer zur Flugzeuglängsrichtung 112 im Wesentlichen senkrechten, Richtung 114 ein Spant 110 mit Z-Profil als ein zweites, die Außenhaut 102 versteifendes Versteifungselement 110. Der Spant 110 ist mittels eines separaten Fußelements 108 oder Clips 108 mit der Außenhaut 102 verbunden. Das Fußelement 108 weist einen rechtwinklig abgeknickten Fußbereich 120 der Breite b2 auf, in dem es mit der Außenhaut 102 vernietet ist. Am oberen Ende des Fußelements 108 verbinden Nieten 118 das Fußelement 108 mit dem Spant 110.

An der Kreuzungsstelle von Spant 110 und Stringer 104 ist im Fußelement 108 eine torartige Durchführungsöffnung 116 ausgebildet, durch die der Stringer 104 unter dem Fußelement 108 und dem von diesem getragenen Spant 110 hindurchgeführt ist. Die Durchführungsöffnung 116 weist in ihrem oberen Abschnitt eine innere Kontur auf, die entsprechend der äußeren Kontur des Distanzstücks 106 geformt ist, so dass die äußere Oberfläche des Distanzstücks 106 und die Innenkante der torartigen Durchführungsöffnung 116 sich passgenau berühren. Der Stringer 104 wird somit durch die Durchführungsöffnung 116 des Fußelements 108 formschlüssig gehalten, so dass er bei Druckbelastung in Flugzeuglängsrichtung 116 nicht in seitlicher Richtung 114 wegknicken kann. Das Distanzstück 106 verhindert dabei mögliche Beschädigungen der Oberflächen von Stringer 104 und Fußelement durch gegenseitige Reibung und vibrationen.

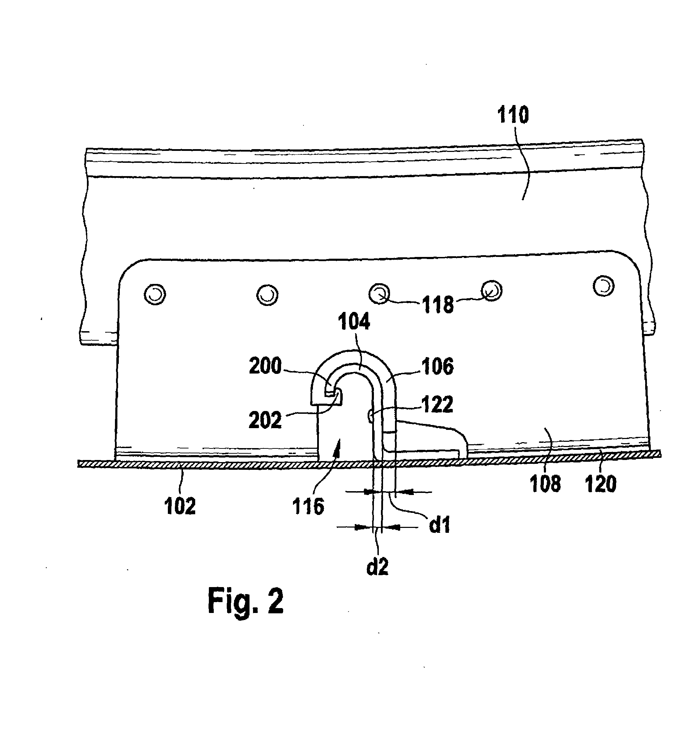

Die geometrische Anordnung der Bauteile zueinander wird durch Fig. 2 weiter verdeutlicht, in der eine Seitenansicht des Strukturbauteils aus Fig. 1 gezeigt ist, mit Blickrichtung von rechts wie in Fig. 1 dargestellt, parallel zur Flugzeuglängsrichtung. Deutlich zu erkennen ist insbesondere die formschlüssige Halterung des Distanzstücks 106 ohne zusätzliche Befestigungselemente auf dem Stringer 104, die durch zusammenwirken der Hakenanformung 202 und der Nase 122 erreicht wird. Wenn das Distanzstück 106 aus einem elastischen Kunststoff bereitgestellt wird, lässt es sich durch Einhaken der Hakenanformung in das Krückstockprofil des Stringers 104 und anschließendes elastisches Einschnappen der Nase 122 in die vorher an der Kreuzungsstelle des Stringers 104 mit dem Spant 110 anzubringende Bohrung äußerst einfach und schnell montieren.

Das Distanzstück 106 folgt wie ersichtlich der Form des Stringerprofils 104 mit konstanter Dicke d1, die etwa gleich groß oder größer als die Dicke d2 des Stringerprofils 104 gewählt wurde. Die Form der Durchführungsöffnung 116 im Fußelement 108 folgt wiederum der äußeren Kontur des Distanzstücks 106. Alternativ kann optional im Distanzstück 106 eine Nut 302 ausgebildet sein, die den Rand der Durchführungsöffnung 116 aufnimmt.

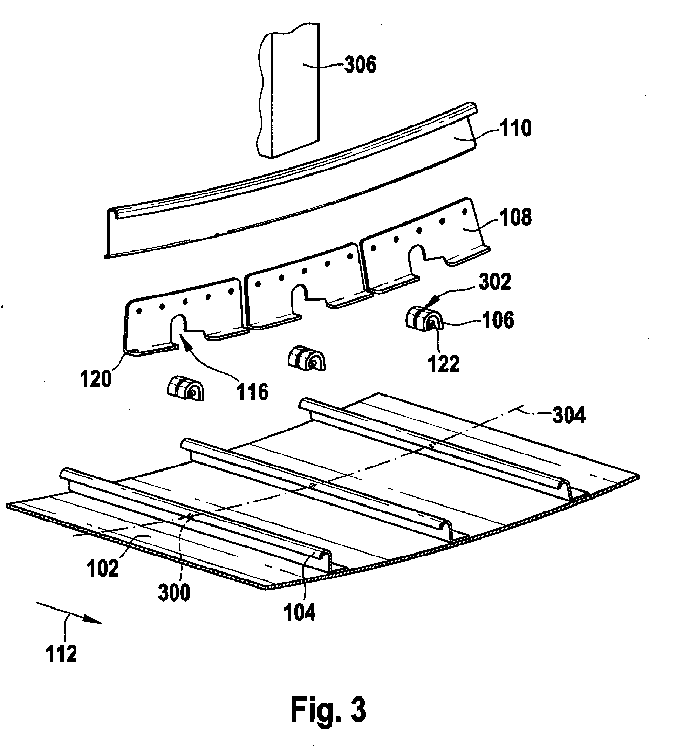

Ein Montageverfahren für derartige Strukturbauteile soll im Folgenden anhand von Fig. 3 erläutert werden, die eine Explosionszeichnung eines Strukturbauteils gemäß einer weiteren Ausführungsform darstellt. Zunächst wird die Innenseite der Außenhaut 102 eines Flugzeugrumpfabschnitts mit in regelmäßigen Abständen in Flugzeuglängsrichtung verlaufenden Stringern 104 versteift, indem die Stringer 104 mit der Außenhaut 102 vernietet oder verklebt werden. Auch können Außenhaut 102 und Stringer 104 einstückig z.B. als ein Faserverbundbauteil 102, 104 ausgeführt werden.

Als nächstes werden längs einer im Wesentlichen senkrecht zur Flugzeuglängsrichtung 112 verlaufenden Linie 304 jeweils Bohrungen 300 in den Stringern 104 angebracht. In jeden Stringer 104 wird ein Distanzstück 106 eingehängt. Durch leichten Druck auf das jeweilige Distanzstück verformt sich dieses elastisch, bis die angeformte Nase 122 in die jeweilige Bohrung 300 einschnappt.

In einem weiteren Schritt werden Fußelemente 108, die wie gezeigt als separate Clips 108 oder auch als ein sich über mehrere Stringer 104 erstreckender Schubkamm ausgebildet sein können, über die Distanzstücke 106 geschoben. Wenn die Distanzstücke, wie hier gezeigt, eine Kerbe 302 aufweisen, wird dabei der Rand der in den Fußelementen 108 vorgesehenen Durchführungsöffnungen in die jeweilige Kerbe 302 eingeschoben. Anschließend werden die Fußelemente 108 mit ihren jeweiligen Fußabschnitten 120 auf der Außenhaut 102 vernietet. In einem abschließenden Schritt wird der Spant 110 durch vernieten an den Fußelementen 108 befestigt.

Insbesondere können Stringer 104 in Bereichen der Außenhaut 102 auf die gezeigte Weise abgestützt werden, in denen der Spant 100 mit weiteren Primärstrukturbauteilen 306 verbunden und durch diese abgestützt ist, so dass eine separate Stützung des Spants an dieser Stelle entfallen kann. Derartige Primärstrukturbauteile 306 können etwa Querträger, Fußbodenstützstangen, der Frachtraumfußboden oder diverse Stützen desselben sein.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können Stringer anderer Profilarten verwendet werden, wobei die Distanzstücke entsprechend der jeweiligen Profilform ausgeführt und an geeigneter Stelle mit Hakenanformungen und Nasen versehen werden können.

### Bezugszeichenliste

- 100: Strukturbauteil
- 102: Außenhaut
- 104: Erstes Versteifungselement
- 106: Distanzstück
- 108: Fußelement
- 110: Zweites Versteifungselement
- 112: Erste Raumrichtung
- 114: Zweite Raumrichtung
- 116: Durchführungsöffnung
- 118: Niete
- 120: Fußabschnitt
- 122: Nase
- 200: Profilschenkel
- 202: Hakenanformung
- 300: Öffnung
- 302: Nut
- 304: Linie der Spantmontage
- 306: Primärstrukturbauteil

## Patentansprüche

1. Strukturbauteil (100) für ein Luft- öder Raumfahrzeug, mit:
einer Außenhaut (102);
einem ersten Versteifungselement (104), welches auf der Außenhaut (102) entlang einer ersten Raumrichtung (112) verläuft;
einem zweiten Versteifungselement (110), welches über dem ersten Versteifungselement (104) in einer zweiten Raumrichtung (114) verläuft; und
einem Fußelement (108), welches das zweite Versteifungselement (110) auf der Außenhaut (102) abstützt;
wobei das Fußelement (108) eine Durchführungsöffnung (116) aufweist, in welcher das erste Versteifungselement (104) formschlüssig gehalten ist, **dadurch gekennzeichnet, dass** zwischen dem ersten Versteifungselement (104) und dem Fußelement (108) ein Distanzstück (106) eingefügt ist.

2. Strukturbauteil nach Anspruch 1,
**dadurch gekennzeichnet,**
**dass** die Durchführungsöffnung (116) das erste Versteifungselement (104) formschlüssig gegen seitliches Wegknicken sichert.

3. Strukturbauteil nach Anspruch 1 oder 2,
**dadurch gekennzeichnet,**
**dass** das Fußelement (108) einstückig mit dem zweiten Versteifungselement (110) ausgebildet ist.

4. Strukturbauteil nach Anspruch 1 oder 2,
**dadurch gekennzeichnet,**
**dass** das Fußelement (108) und das zweite Versteifungselement (110) miteinander vernietet (118) sind.

5. Strukturbauteil nach wenigstens einem der vorhergehenden Ansprüche,
**dadurch gekennzeichnet,**
**dass** das Distanzstück (106) einen Kunststoffwerkstoff, insbesondere einen thermoplastischen Werkstoff aufweist.

6. Strukturbauteil nach wenigstens einem der vorhergehenden Ansprüche,
**dadurch gekennzeichnet,**
**dass** das Distanzstück (106) eine Länge (b1) aufweist, welche nicht geringer als eine Breite (b2) eines Fußabschnitts (120) des Fußelements (108) ist.

7. Strukturbauteil nach wenigstens einem der vorhergehenden Ansprüche,
**dadurch gekennzeichnet,**
**dass** das Distanzstück (106) eine Dicke (d1) aufweist, welche nicht geringer als eine Dicke (d2) des ersten Versteifungselements (104) ist.

8. Strukturbauteil nach wenigstens einem der vorhergehenden Ansprüche,
**dadurch gekennzeichnet,**
**dass** das Distanzstück (106) formschlüssig auf dem ersten Versteifungselement (104) gehalten ist.

9. Strukturbauteil nach wenigstens einem der vorhergehenden Ansprüche,
**dadurch gekennzeichnet,**
**dass** das Distanzstück (106) eine Nase (122) aufweist, welche in einer entsprechend geformten Öffnung (300) des ersten versteifungselements (104) ruht.

10. Strukturbauteil nach wenigstens einem der vorhergehenden Ansprüche,
**dadurch gekennzeichnet,**
**dass** das erste Versteifungselement (104) einen Profilschenkel (200) aufweist, wobei das Distanzstück (106) eine Hakenanformung (202) aufweist, welche um den Profilschenkel (200) gehakt ist.

11. Strukturbauteil nach wenigstens einem der vorhergehenden Ansprüche,
**dadurch gekennzeichnet,**
**dass** das Distanzstück (106) eine Nut aufweist, in welche das Fußelement (108) eingeschoben ist.

12. Luft- oder Raumfahrzeug, mit einem Strukturbauteil (100) nach wenigstens einem der vorhergehenden Ansprüche.

13. Verfahren zum Versteifen einer Außenhaut (102) eines Luft- oder Raumfahrzeugs, mit folgenden Schritten:
Befestigen eines ersten Versteifungselements (104) auf der Außenhaut (102) entlang einer ersten Raumrichtung (112);
Befestigen eines Fußelements (108) mit einer Durchführungsöffnung (116) über dem ersten Versteifungselement (104) derart, dass das erste Versteifungselement (104) in der Durchführungsöffnung (116) formschlüssig gehalten wird;
Einsetzen eines Distanzstückes (106) zwischen dem ersten Versteifungselement (104) und dem Fußelement (108); und
Befestigen eines zweiten Versteifungselements (110) am Fußelement (108) über dem ersten Versteifungselement (104) in einer zweiten Raumrichtung (114).

14. Verfahren nach Anspruch 13,
**dadurch gekennzeichnet,**
**dass** das Einsetzen des Distanzstücks (106) einen Teilschritt des Hakens einer Hakenanformung (202) des Distanzstücks (106) um einen Profilschenkel (200) des ersten Versteifungselements (104) umfasst.

15. Verfahren nach Anspruch 13 oder 14,
**dadurch gekennzeichnet,**
**dass** das Einsetzen des Distanzstücks (106) einen Teilschritt des Einführens einer Nase (122) des Distanzstücks in eine Öffnung (300) im ersten Versteifungselement (104) umfasst.

16. Verfahren nach Anspruch 15,
**dadurch gekennzeichnet,**
**dass** weiterhin ein Schritt des Bohrens der Öffnung (300) in das erste Versteifungselement (104) vorgesehen ist.

17. Verfahren nach wenigstens einem der Ansprüche 13 bis 16,
**dadurch gekennzeichnet,**
**dass** weiterhin ein Schritt des Einführens des Fußelements (108) in eine Nut (302) des Distanzstücks (106) vorgesehen ist.

18. Verfahren nach wenigstens einem der Ansprüche 13 bis 17,
**dadurch gekennzeichnet,**
**dass** das Befestigen des zweiten Versteifungselements (110) durch Vernieten (118) des zweiten Versteifungselements (110) mit dem Fußelement (108) ausgeführt wird.

## Claims

1. A structural component (100) for an air- or spacecraft, having:
- an outer skin (102);
- a first reinforcing element (104), which extends in a first spatial direction (112) on the outer skin (102);
- a second reinforcing element (110), which extends over the first reinforcing element (104) in a second spatial direction (114); and
- a foot element (108), which supports the second reinforcing element (110) on the outer skin (102);
the foot element (108) comprising a lead-through opening (116), in which the first reinforcing element (104) is held in form-fitting manner, **characterised in that** a spacer (106) is inserted between the first reinforcing element (104) and the foot element (108).

2. A structural component according to claim 1, **characterised in that** the lead-through opening (116) secures the first reinforcing element (104) form-fittingly against being bent away sideways.

3. A structural component according to claim 1 or claim 2, **characterised in that** the foot element (108) is constructed in one piece with the second reinforcing element (110).

4. A structural component according to claim 1 or claim 2, **characterised in that** the foot element (108) and the second reinforcing element (110) are riveted together (118).

5. A structural component according to at least one of the preceding claims, **characterised in that** the spacer (106) comprises a plastics material, in particular a thermoplastic material.

6. A structural component according to at least one of the preceding claims, **characterised in that** the spacer (106) has a length (b1) which is no less than a width (b2) of a foot portion (120) of the foot element (108).

7. A structural component according to at least one of the preceding claims, **characterised in that** the spacer (106) has a thickness (d1) which is no less than a thickness (d2) of the first reinforcing element (104).

8. A structural component according to at least one of the preceding claims, **characterised in that** the spacer (106) is held form-fittingly on the first reinforcing element (104).

9. A structural component according to at least one of the preceding claims, **characterised in that** the spacer (106) comprises a lug (122) which rests in a correspondingly shaped opening (300) in the first reinforcing element (104).

10. A structural component according to at least one of the preceding claims, **characterised in that** the first reinforcing element (104) comprises a profile leg(200), the spacer (106) comprising a moulded-on hook portion (202), which is hooked around the profile leg (200).

11. A structural component according to at least one of the preceding claims, **characterised in that** the spacer (106) comprises a groove, into which the foot element (108) is inserted.

12. An air- or spacecraft, having a structural component (100) according to at least one of the preceding claims.

13. A method of reinforcing an outer skin (102) of an air- or spacecraft, having the following steps:
- attaching a first reinforcing element (104) to the outer skin (102) in a first spatial direction (112);
- attaching a foot element (108) with a lead-through opening (116) over the first reinforcing element (104) such that the first reinforcing element (104) is held form-fittingly in the lead-through opening (116);
- inserting a spacer (106) between the first reinforcing element (104) and the foot element (108); and
- attaching a second reinforcing element (110) to the foot element (108) over the first reinforcing element (104) in a second spatial direction (114).

14. A method according to claim 13, **characterised in that** insertion of the spacer (106) includes a sub-step of hooking a moulded-on hook portion (202) of the spacer (106) around a profile leg (200) of the first reinforcing element (104).

15. A method according to claim 13 or claim 14, **characterised in that** insertion of the spacer (106) comprises a sub-step of introducing a lug (122) of the spacer into an opening (300) in the first reinforcing element (104).

16. A method according to claim 15, **characterised in that** a step of drilling the opening (300) into the first reinforcing element (104) is additionally provided.

17. A method according to at least one of claims 13 to 16, **characterised in that** a step of introducing the foot element (108) into a groove (302) in the spacer (106) is additionally provided.

18. A method according to at least one of claims 13 to 17, **characterised in that** attachment of the second reinforcing element (110) is carried out by riveting (118) the second reinforcing element (110) to the foot element (108).

## Revendications

1. Composant structurel (100) pour un aéronef ou un véhicule spatial, comprenant :
- une enveloppe extérieure (102) ;
- un premier élément de renforcement (104), qui s'étend sur l'enveloppe extérieure (102) le long d'une première direction spatiale (112) ;
- un second élément de renforcement (110), qui s'étend au-dessus du premier élément de renforcement (104) dans une seconde direction spatiale (114) ; et
- un élément de pied (108), qui soutient le second élément
de renforcement (110) sur l'enveloppe extérieure (102) ;
l'élément de pied (108) présentant une ouverture de passage (116) dans laquelle le premier élément de renforcement (104) est maintenu par complémentarité de forme, **caractérisé en ce qu'**une entretoise (106) est insérée entre le premier élément de renforcement (104) et l'élément de pied (108).

2. Composant structurel selon la revendication 1, **caractérisé en ce que** l'ouverture de passage (116) protège, par complémentarité de forme, le premier élément de renforcement (104) contre tout infléchissement latéral.

3. Composant structurel selon la revendication 1 ou 2, **caractérisé en ce que** l'élément de pied (108) est conçu d'un seul tenant avec le second élément de renforcement (110).

4. Composant structurel selon la revendication 1 ou 2, **caractérisé en ce que** l'élément de pied (108) et le second élément de renforcement (110) sont rivetés (118) l'un avec l'autre.

5. Composant structurel selon au moins une des revendications précédentes, **caractérisé en ce que** l'entretoise (106) présente un matériau en plastique, en particulier un matériau thermoplastique.

6. Composant structurel selon au moins une des revendications précédentes, **caractérisé en ce que** l'entretoise (106) présente une longueur (b1) qui n'est pas inférieure à une largeur (b2) d'une section de pied (120) de l'élément de pied (108).

7. Composant structurel selon au moins une des revendications précédentes, **caractérisé en ce que** l'entretoise (106) présente une épaisseur (d1) qui n'est pas inférieure à une épaisseur (d2) du premier élément de renforcement (104).

8. Composant structurel selon au moins une des revendications précédentes, **caractérisé en ce que** l'entretoise (106) est maintenue par complémentarité de forme sur le premier élément de renforcement (104).

9. Composant structurel selon au moins une des revendications précédentes, **caractérisé en ce que** l'entretoise (106) présente un ergot (122) qui repose dans une ouverture (300) du premier élément de renforcement (104) formée en conséquence.

10. Composant structurel selon au moins une des revendications précédentes, **caractérisé en ce que** le premier élément de renforcement (104) possède une branche de profilé (200), l'entretoise (106) présentant une portion en crochet surmoulée (202) qui est accrochée autour de la branche de profilé (200).

11. Composant structurel selon au moins une des revendications précédentes, **caractérisé en ce que** l'entretoise (106) présente une rainure dans laquelle l'élément de pied (108) est inséré.

12. Aéronef ou véhicule spatial comprenant un composant structurel (100) selon au moins une des revendications précédentes.

13. Procédé de renforcement d'une enveloppe extérieure (102) d'un aéronef ou d'un véhicule spatial, comprenant les étapes suivantes :
- fixation d'un premier élément de renforcement (104) sur l'enveloppe extérieure (102) le long d'une première direction spatiale (112) ;
- fixation d'un élément de pied (108) doté d'une ouverture de passage (116) au-dessus du premier élément de renforcement (104) de telle façon que le premier élément de renforcement (104) est maintenu par complémentarité de forme dans l'ouverture de passage (116) ;
- mise en place d'une entretoise (106) entre le premier élément de renforcement (104) et l'élément de pied (108) ; et
- fixation d'un second élément de renforcement (110) à l'élément de pied (108) au-dessus du premier élément de renforcement (104) dans une seconde direction spatiale (114).

14. Procédé selon la revendication 13, **caractérisé en ce que** la mise en place de l'entretoise (106) comprend une étape partielle d'accrochage d'une saillie en crochet (202) de l'entretoise (106) autour d'une branche de profilé (200) du premier élément de renforcement (104).

15. Procédé selon la revendication 13 ou 14, **caractérisé en ce que** la mise en place de l'entretoise (106) comprend une étape partielle d'introduction d'un ergot (122) de l'entretoise dans une ouverture (300) du premier élément de renforcement (104).

16. Procédé selon la revendication 15, **caractérisé en ce qu'**une étape de perçage de l'ouverture (300) dans le premier élément de renforcement (104) est également prévue.

17. Procédé selon au moins une des revendications 13 à 16, **caractérisé en ce qu'**une étape d' introduction de l'élément de pied (108) dans une rainure (302) de l'entretoise (106) est également prévue.

18. Procédé selon au moins une des revendications 13 à 17, **caractérisé en ce que** la fixation du second élément de renforcement (110) est réalisée par rivetage (118) du second élément de renforcement (110) avec l'élément de pied (108).
